(19) Europäisches Patentamt
European Patent Office
Office européen des brevets

(11)  **EP 2 759 773 B1**

(12)  **EUROPÄISCHE PATENTSCHRIFT**

(45) Veröffentlichungstag und Bekanntmachung des Hinweises auf die Patenterteilung:
**16.05.2018  Patentblatt 2018/20**

(51) Int Cl.:
**F24D 11/02** *(2006.01)*    **F24D 17/02** *(2006.01)*
**F24D 19/10** *(2006.01)*    **F25B 40/00** *(2006.01)*
**F28D 20/00** *(2006.01)*

(21) Anmeldenummer: **14151022.2**

(22) Anmeldetag: **14.01.2014**

(54) **Anordnung und Verfahren zur Wärmeversorgung eines Gebäudes**

Apparatus and method for supplying heat to a building

Dispositif et procédé d'alimentation en chaleur d'un bâtiment

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.01.2013  DE 102013001455**

(43) Veröffentlichungstag der Anmeldung:
**30.07.2014  Patentblatt 2014/31**

(73) Patentinhaber: **Hochschule für angewandte Wissenschaften München**
**80335 München (DE)**

(72) Erfinder: **Ziegler, Prof. Dr. Franz Josef**
**86504 Merching (DE)**

(74) Vertreter: **Hoefer & Partner Patentanwälte mbB**
**Pilgersheimer Straße 20**
**81543 München (DE)**

(56) Entgegenhaltungen:
EP-A1- 2 196 745       WO-A1-03/106900
AT-A1- 507 709        AT-A1- 507 710
DE-A1- 2 711 144      DE-A1- 3 442 169
DE-A1- 10 062 764     DE-A1-102005 040 456
DE-B3-102007 027 570

**Beschreibung**

Vorliegende Erfindung betrifft eine Anordnung und ein Verfahren zur Wärmeversorgung eines Gebäudes.

In Deutschland wird mehr als ein Drittel des Primärenergiebedarfs allein für die Raumheizung und Warmwasserbereitung benötigt. Die Steigerung der Energieeffizienz an Heizungs- und Trinkwassererwärmungsanlagen stellt daher ein grundlegendes energiepolitisches Ziel dar. Die Bereitstellung der Heizwärme und des Warmwassers wird künftig zunehmend mit hocheffizienten Wärmepumpen erfolgen. Der Betrieb der Wärmepumpe mit Strom aus erneuerbaren Energien macht die Wärmepumpe zu einem nachhaltigen Heizsystem und zu einer tragenden Säule der zukünftigen Energieversorgung. Im Heizbetrieb sind mit der Wärmequelle "Erdreich" bereits heute hohe Jahresarbeitszahlen möglich. Die Effizienz von Wärmepumpen muss jedoch insbesondere bei der Warmwasserbereitung deutlich verbessert werden. Messungen haben bei gut gedämmten Gebäuden gezeigt, dass die Jahresarbeitszahl umso geringer ist, je höher der Anteil der Trinkwassererwärmung ist. Diese findet im Vergleich zur Raumheizung ganzjährig statt und erfordert höhere Heizmitteltemperaturen. Dadurch steigt der Anteil der für die Trinkwassererwärmung benötigten Energie gegenüber der Raumheizung deutlich an. Eine Optimierung ist hier dringend geboten, da bei sehr gut gedämmten Gebäuden der Anteil der Trinkwassererwärmung 30 bis 60% der gesamten Heizleistung beträgt.

Eine Anordnung zur Wärmeversorgung gemäß dem Oberbegriff des Anspruchs 1 ist aus der WO 03/106900 A1 bekannt. Eine weitere Anordnung zur Wärmeversorgung ist aus der DE 10 2005 040 456 A1 bekannt.

Es ist Aufgabe vorliegender Erfindung, eine Anordnung und ein Verfahren zur Wärmeversorgung eines Gebäudes bereitzustellen, die bei kostengünstigem Aufbau wartungsarm, kostengünstig und energieeffizient die Wärmeversorgung gewährleisten.

Die Lösung der Aufgabe erfolgt durch die beiden unabhängigen Ansprüche. Der Unteranspruch hat eine vorteilhafte Weiterbildung der Erfindung zum Gegenstand. Somit wird die Aufgabe gelöst durch eine Anordnung zur Wärmeversorgung eines Gebäudes, umfassend ein Expansionsventil zum Expandieren eines Kältemittels, einen Verdampfer zum Verdampfen des expandierten Kältemittels, einen internen Wärmeübertrager zum Überhitzen des verdampften Kältemittels, und einen Verdichter zum Verdichten des überhitzten Kältemittels. Der Verdampfer wird über eine Wärmequelle mit Energie versorgt. Insbesondere wird hier das "Erdreich" als Wärmequelle genutzt. Mittels eines entsprechenden Wärmequellenfluides, beispielsweise einer Sole, erfolgt die Versorgung des Verdampfers mit Wärme. Die erfindungsgemäße Anordnung umfasst des Weiteren einen ersten Wärmeübertrager und einen zweiten Wärmeübertrager. Die beiden Wärmeübertrager sind in Reihe geschaltet. Dies bedeutet, dass das Kältemittel nach dem Verdichter zunächst durch den ersten Wärmeübertrager und dann durch den zweiten Wärmeübertrager fließt. Mittels der beiden Wärmeübertrager wird die Wärme vom Kältemittel auf einen sogenannten Fluidkreislauf (auch: Heizkreislauf) übertragen. Der Fluidkreislauf dient zur letztendlichen Wärmeversorgung des Gebäudes: Beispielsweise ist an dem Fluidkreislauf ein Frischwasserwärmeübertrager und/oder die Gebäudeheizung angeschlossen. Nach dem zweiten Wärmeübertrager fließt das Kältemittel in den internen Wärmeübertrager. Im internen Wärmeübertrager wird also das vom zweiten Wärmeübertrager kommende Kältemittel dazu genutzt, um das vom Verdampfer kommende Kältemittel zu überhitzen. Dabei erfolgt gleichzeitig eine Unterkühlung des vom zweiten Wärmeübertrager kommenden Kältemittels. Das unterkühlte Kältemittel fließt nach dem internen Wärmeübertrager zum Expansionsventil. Des Weiteren ist ein Kaskadenregler für den Kältemittelkreislauf vorgesehen. Hierzu umfasst die Anordnung einen in den Verdampfer mündenden Zulauf für das Wärmequellenfluid, vorzugsweise eine Sole, und eine erste Vorrichtung zum Bestimmen einer ersten Temperatur des Wärmequellenfluides im Zulauf. Ferner ist eine zweite Vorrichtung zum Bestimmen einer zweiten Temperatur des Kältemittels zwischen dem Expansionsventil und dem Verdampfer vorgesehen. Mittels einer dritten Vorrichtung wird eine dritte Temperatur des Kältemittels zwischen dem internen Wärmeübertrager und einem Kältemitteleingang des ersten Wärmeübertragers bestimmt. Vorzugsweise erfolgt die Bestimmung der dritten Temperatur zwischen dem Verdichter und dem Kältemitteleingang des ersten Wärmeübertragers. Die jeweilige Temperatur des Wärmequellenfluides oder des Kältemittels kann direkt oder indirekt bestimmt werden. So kann entweder in der Leitung oder außen an der Leitung gemessen werden. Des Weiteren ist es möglich, eine Hilfsgröße, beispielsweise den Druck in der Leitung, zu messen und daraus auf die Temperatur zu schließen. Die Anordnung umfasst einen Hilfsregler und einen Hauptregler. Der Hilfsregler dient zum Regeln des Expansionsventils. Das Expansionsventil ist beispielsweise mittels eines Elektromotors verstellbar. Insbesondere wird mit dem Hilfsregler der Volumenstrom am Expansionsventil eingestellt. Der Hilfsregler bestimmt eine Differenz aus der ersten Temperatur und der zweiten Temperatur. Mittels des Hilfsreglers wird das Expansionsventil so eingestellt, dass diese Differenz einem Hilfs-Sollwert entspricht. Der Hauptregler gibt den Hilfs-Sollwert vor bzw. korrigiert den Hilfs-Sollwert. Dies erfolgt in Abhängigkeit der dritten Temperatur. Die zweite Temperatur wird aus dem Verdampfungsdruck bestimmt und kann mit einer sehr geringen Trägheit erfasst werden. Deshalb kann der Hilfsregler relativ gut das Expansionsventil ansteuern. Die dritte Temperatur, also die Heißgastemperatur, wird dagegen mit großer Trägheit erfasst. Deshalb ist bevorzugt vorgesehen, dass der Hauptregler den Hilfs-Sollwert nur in definierten Zeitschritten verändert. Diese Zeitschritte liegen bevorzugt zumindest eine Sekunde auseinander, so dass nur in diesen diskreten Abständen eine Korrektur des Hilfs-Sollwertes erfolgt. Die folgenden Ausführungsformen stellen keinen Bestandteil der in den Ansprüchen definierten Erfindung dar. Bevorzugt umfasst die Anordnung einen Pufferspeicher im Fluidkreislauf. Dieser Pufferspeicher dient zur Aufnahme einer Fluidsäule. In dem Pufferspeicher sind zumindest ein Hochtemperaturzugang, zumindest ein Mitteltemperaturzugang und zumindest ein Niedrigtemperaturzugang vorgesehen. Die drei verschiedenen Zugänge dienen jeweils zum turbulenzarmen Be- und Entladen des Pufferspeichers. Dies bedeutet, dass mittels der drei Zugänge Fluid in den Pufferspeicher eingebracht und aus dem Pufferspeicher entnommen werden kann. Das Einbringen und Entnehmen des Fluides erfolgt dabei möglichst ohne einer Vermischung der Fluidsäule. Dadurch entstehen mehrere übereinander angeordnete Schichten mit unterschiedlichen Temperaturen im Pufferspeicher. Insbesondere entsteht im obersten Bereich eine Schicht mit etwa 60°C, die zur Erwärmung des Frischwassers genutzt werden kann. Im mittleren Bereich des Pufferspeichers entsteht eine Schicht mit ca. 55°C, die beispielsweise zum Beimischen für den ersten Wärmeübertrager genutzt werden kann.

Im untersten Bereich entsteht eine Schicht mit ca. 35°C, die für die Gebäudeheizung, insbesondere eine Flächenheizung, genutzt werden kann.

Der erste Wärmeübertrager, der zweite Wärmeübertrager, der interne Wärmeübertrager und der Verdampfer weisen jeweils vier Anschlüsse für den Kältemittelkreislauf bzw. den Fluidkreislauf auf. Diese Anschlüsse werden als Kältemitteleingang, Kältemittelausgang, Fluideingang bzw. Fluidausgang bezeichnet.

Bevorzugt ist vorgesehen, dass der Fluidausgang des ersten Wärmeübertragers an den Hochtemperaturzugang des Pufferspeichers angeschlossen ist. Ferner ist bevorzugt ein Frischwasserwärmeübertrager vorgesehen. Der Frischwasserwärmeübertrager wird zum Erwärmen des Frischwassers bzw. Trinkwassers des Gebäudes genutzt. Ein Fluideingang des Frischwasserwärmeübertragers ist an den Fluidausgang des ersten Wärmeübertragers und/oder an den Hochtemperaturzugang des Pufferspeichers angeschlossen. Dadurch kann der Frischwasserwärmeübertrager entweder direkt vom ersten Wärmeübertrager oder aus der obersten Schicht des Pufferspeichers versorgt werden. Beispielsweise kann eine Leitung vom Fluidausgang des ersten Wärmeübertragers direkt zum Frischwasserwärmeübertrager führen. Von dieser Leitung kann eine Abzweigung zum Hochtemperaturzugang des Pufferspeichers führen. Alternativ dazu ist es auch möglich, dass die Leitung vom Fluidausgang des ersten Wärmeübertragers lediglich in den Pufferspeicher führt, wobei dann der Frischwasserwärmeübertrager stets über den Hochtemperaturzugang des Pufferspeichers versorgt wird.

Ferner ist bevorzugt vorgesehen, dass der Fluidausgang des zweiten Wärmeübertragers an den Mitteltemperaturzugang des Pufferspeichers angeschlossen ist. Des Weiteren ist vorgesehen, dass eine Gebäudeheizung, insbesondere eine Flächenheizung, mit ihrem Vorlauf mit dem Fluidausgang des zweiten Wärmeübertragers und/oder mit dem Mitteltemperaturzugang des Pufferspeichers verbunden ist. Das durch den zweiten Wärmeübertrager erwärmte Fluid kann somit wahlweise über den Mitteltemperaturzugang in den Pufferspeicher oder direkt in die Gebäudeheizung fließen. Des Weiteren kann über den Mitteltemperaturzugang des Pufferspeichers Fluid aus dem Pufferspeicher entnommen werden und in die Gebäudeheizung fließen.

Bevorzugt ist vorgesehen, dass der Fluidausgang des Frischwasserwärmeübertragers und ein Rücklauf der Gebäudeheizung an den Fluideingang des zweiten Wärmeübertragers und/oder an den Niedrigtemperaturzugang des Pufferspeichers angeschlossen sind. Das vom Frischwasserwärmeübertrager und von der Gebäudeheizung kommende kalte Fluid läuft somit entweder in den Pufferspeicher oder in den zweiten Wärmeübertrager.

Somit ist also ein Aufladen und ein Entladen des Pufferspeichers möglich: Zum Aufladen des Pufferspeichers fließt Fluid aus dem ersten Wärmeübertrager über den Hochtemperaturzugang in den Pufferspeicher. Des Weiteren ist es möglich, dass Fluid aus dem zweiten Wärmeübertrager über den Mitteltemperaturzugang in den Pufferspeicher fließt. Zum Entladen entnimmt der Frischwasserwärmeübertrager Fluid über den Hochtemperaturzugang des Pufferspeichers. Die Gebäudeheizung entnimmt Fluid über den Mitteltemperaturzugang des Pufferspeichers. Über den Niedrigtemperaturzugang des Pufferspeichers erfolgt der Volumenausgleich im Pufferspeicher.

Des Weiteren ist bevorzugt vorgesehen, dass der Fluidausgang des zweiten Wärmeübertragers an den Fluideingang des ersten Wärmeübertragers angeschlossen ist. Des Weiteren ist vorgesehen, dass in den Fluideingang des ersten Wärmeübertragers Fluid aus dem Pufferspeicher aus einem Zwischenanschluss zwischen dem Hochtemperaturzugang und dem Mitteltemperaturzugang einleitbar ist. Vorzugsweise kann zwischen dem Zwischenanschluss und dem Fluideingang des ersten Wärmeübertragers mittels eines ersten Mischventils Fluid vom Fluidausgang des zweiten Wärmeübertragers beigemischt werden. Diese Beimischung erfolgt insbesondere in Abhängigkeit der Temperatur am Fluidausgang des ersten Wärmeübertragers.

Bevorzugt ist im Pufferspeicher zumindest ein Schichtladeelement angeordnet, wobei das mindestens eine Schichtladeelement eine Vielzahl an Leitblechen umfasst, und wobei der Hochtemperaturzugang und/oder der Mitteltemperaturzugang und/oder der Niedrigtemperaturzugang so angeordnet bzw. ausgebildet sind, dass das Fluid zum turbulenzarmen Beladen und/oder und Entladen des Pufferspeichers über den Hochtemperaturzugang und/oder den Mitteltemperaturzugang und/oder den Niedrigtemperaturzugang jeweils über die Leitbleche mindestens eines Schichtladeelements fließt.

Die Erfindung umfasst des Weiteren ein Verfahren zur Wärmeversorgung eines Gebäudes, umfassend die Schritte gemäß dem unabhängigen Anspruch 2. Nach dem Verflüssigen des Kältemittels wird das Kältemittel zur Überhitzung des verdampften Kältemittels genutzt. Dabei erfolgt gleichzeitig eine Unterkühlung des verflüssigten Kältemittels. Direkt im Anschluss wird das unterkühlte Kältemittel expandiert.

Nachfolgend wird ein Ausführungsbeispiel der Erfindung anhand der begleitenden Zeichnung im Detail erläutert. Dabei zeigen:

Fig. 1 einen schematischen Aufbau einer erfindungsgemäßen Anordnung zur Wärmeversorgung eines Gebäudes gemäß einem Ausführungsbeispiel,

Fig. 2 ein Detail der erfindungsgemäßen Anordnung gemäß dem Ausführungsbeispiel,

Fig. 3 eine Darstellung des erfindungsgemäßen Verfahrens gemäß dem Ausführungsbeispiel,

Fig. 4 ein Diagramm zur Wärmeleistung eines verwendeten Verdampfers der erfindungsgemäßen Anordnung gemäß dem Ausführungsbeispiel, und

Fig. 5 ein weiteres Detail der erfindungsgemäßen Anordnung gemäß dem Ausführungsbeispiel.

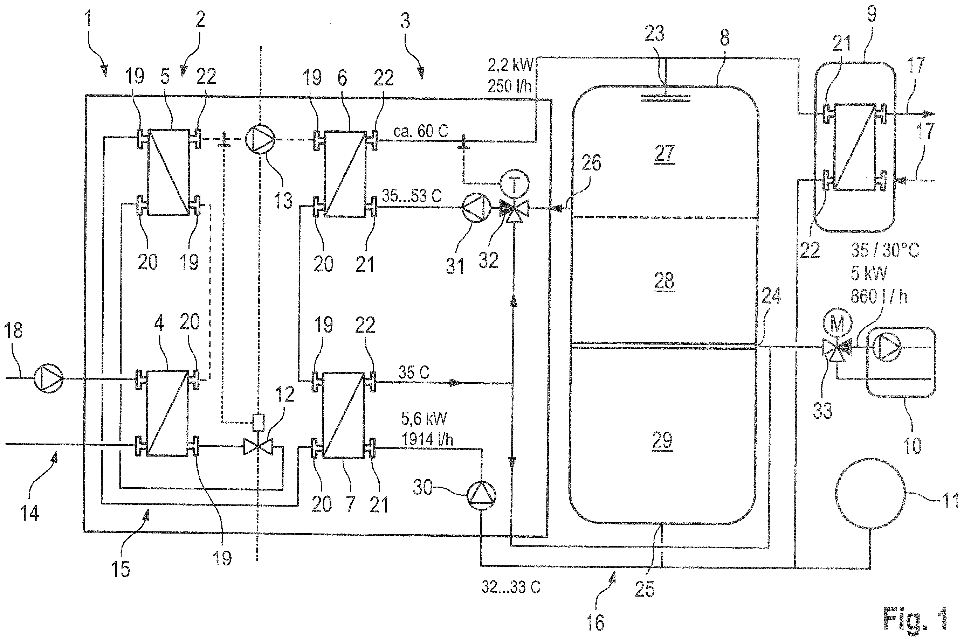

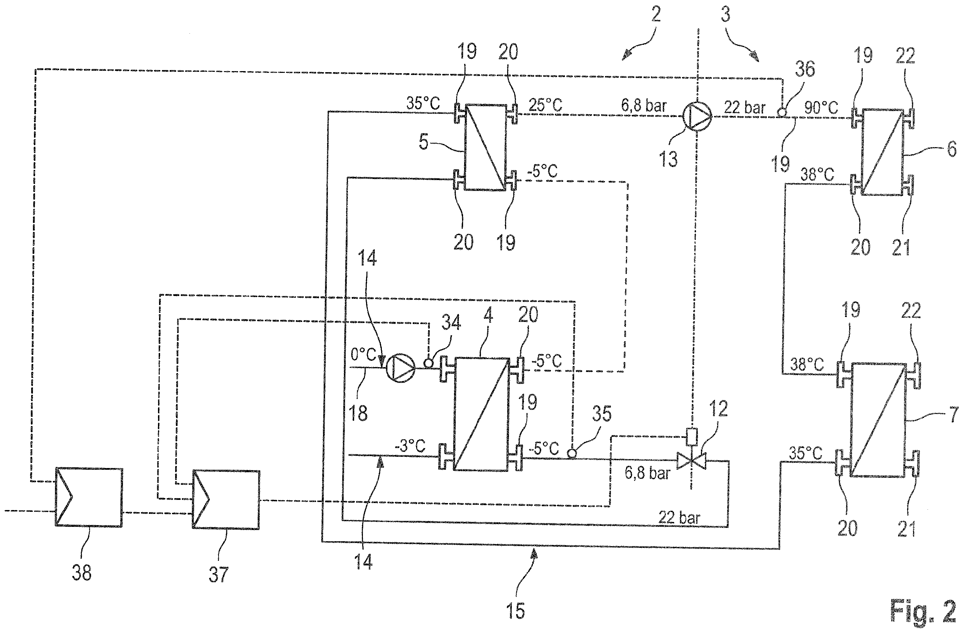

Im Folgenden wird anhand der Fig. 1 und 2 der Aufbau einer erfindungsgemäßen Anordnung 1 zur Wärmeversorgung eines Gebäudes gemäß einem Ausführungsbeispiel erläutert.

Fig. 1 zeigt die Anordnung 1. Diese ist durch die gestrichelte Linie in einen Niederdruckbereich 2 und einen Hochdruckbereich 3 unterteilt. Im Niederdruckbereich 2 sind ein Verdampfer 4 und ein interner Wärmeübertrager 5 vorgesehen. Im Hochdruckbereich 3 befinden sich ein erster Wärmeübertrager 6, ein zweiter Wärmeübertrager 7, ein Pufferspeicher 8 und ein Frischwasserwärmeübertrager 9. Des Weiteren sind eine Gebäudeheizung 10, ausgebildet als Flächenheizung, und ein Ausdehnungsgefäß 11 (auch Druckhaltung genannt) vorgesehen.

Zwischen dem Niederdruckbereich 2 und dem Hochdruckbereich 3 befinden sich ein Expansionsventil 12 und ein Verdichter 13.

In der Anordnung 1 gibt es drei Kreisläufe für Flüssigkeiten: Ein Wärmequellenfluidkreislauf 14 versorgt den Verdampfer 4 mit Wärme. Der Wärmequellenfluidkreislauf 14 ist beispielsweise als Solekreislauf ausgebildet und nutzt die Wärmequelle "Erdreich". Der Verdampfer 4, der interne Wärmeübertrager 5, der erste Wärmeübertrager 6 und der zweite Wärmeübertrager 7 sind über einen Kältemittelkreislauf 15 miteinander verbunden. Der erste Wärmeübertrager 6 und der zweite Wärmeübertrager 7 entnehmen die Wärme aus dem Kältemittelkreislauf 15 und übergeben die Wärme an einen Fluidkreislauf 16. In dem Fluidkreislauf 16 befinden sich auch der Pufferspeicher 8, die Gebäudeheizung 10 und der Frischwasserwärmeübertrager 9 sowie das Ausdehnungsgefäß 11.

Im Wärmequellenfluidkreislauf 14 ist ein Zulauf 18 definiert. Über diesen Zulauf 18 läuft das Wärmequellenfluid in den Verdampfer 4.

Der Frischwasserwärmeübertrager 9 weist zwei Frischwasseranschlüsse 17 für den Zu- und Ablauf des Frischwassers auf. Dadurch kann der Frischwasserwärmeübertrager 9 die Wärme aus dem Fluidkreislauf 16 an das Frischwasser übertragen.

Die Anschlüsse am Verdampfer 4, am internen Wärmeübertrager 5, am ersten Wärmeübertrager 6 und am zweiten Wärmeübertrager 7 im Kältemittelkreislauf 15 werden als Kältemitteleingang 19 und Kältemittelausgang 20 bezeichnet. Die Anschlüsse am ersten Wärmeübertragers 6, am zweiten Wärmeübertrager 7 und am Frischwasserwärmeübertrager 9 im Fluidkreislauf 16 werden als Fluideingang 21 und Eluidausgang 22 bezeichnet.

Der Pufferspeicher 8 weist zumindest drei übereinander angeordnete Bereiche auf: Einen Hochtemperaturbereich 27, einen Mitteltemperaturbereich 28 und einen Niedrigtemperaturbereich 29. Im gezeigten Beispiel liegt die Temperatur des Fluides im Hochtemperaturbereich 27 bei ca. 60°C, im Mitteltemperaturbereich 28 bei ca. 55°C und im Niedrigtemperaturbereich 29 bei ca. 35°C. Der Pufferspeicher 8 weist einen Hochtemperaturzugang 23 im Hochtemperaturbereich 27, insbesondere am oberen Ende des Pufferspeichers 8, auf. Des Weiteren ist im Pufferspeicher 8 ein Mitteltemperaturzugang 24 am Übergang vom Mitteltemperaturbereich 28 zum Niedrigtemperaturbereich 29 vorgesehen. Ein Niedrigtemperaturzugang 25 des Pufferspeichers 8 befindet sich am unteren Ende des Niedrigtemperaturbereichs 29. Über die drei Zugänge 23-25 kann der Pufferspeicher turbulenzarm be- und entladen werden. Des Weiteren ist ein Zwischenanschluss 26 zwischen dem Hochtemperaturbereich 27 und dem Mitteltemperaturbereich 28 vorgesehen. Über den Zwischenanschluss 26 wird lediglich Fluid entnommen.

Der Kältemittelausgang 20 des Verdampfers 4 ist mit dem Kältemitteleingang 19 auf einer heißen Seite des internen Wärmeübertragers 5 direkt verbunden. Der Kältemittelausgang 20 auf der heißen Seite des internen Wärmeübertragers 5 ist direkt mit dem Verdichter 13 verbunden. Der Verdichter 13 wiederum ist direkt mit dem Kältemitteleingang 19 des ersten Wärmeübertragers 6 verbunden. Der Kältemittelausgang 20 des ersten Wärmeübertragers 6 ist direkt mit dem Kältemitteleingang 19 des zweiten Wärmeübertragers 7 verbunden. Der Kältemittelausgang 20 des zweiten Wärmeübertragers 7 ist direkt mit dem Kältemitteleingang 19 auf einer kalten Seite des internen Wärmeübertragers 5 verbunden. Der Kältemittelausgang 20 auf der kalten Seite des internen Wärmeübertragers 5 ist direkt mit dem Expansionsventil 12 verbunden. Das Expansionsventil 12 wiederum ist mit dem Kältemitteleingang 19 des Verdampfers 4 verbunden.

Der Fluidausgang 22 des ersten Wärmeübertragers 6 ist mit dem Hochtemperaturzugang 23 und mit dem Fluideingang 21 des Frischwasserwärmeübertragers 9 verbunden. Der Fluidausgang 22 des zweiten Wärmeübertragers 7 ist mit dem Fluideingang 21 des ersten Wärmeübertragers 6, mit dem Mitteltemperaturzugang 24 und mit einem Vorlauf der Gebäudeheizung 10 verbunden. Zwischen dem Zwischenanschluss 26 aus dem Pufferspeicher 8 und dem Fluideingang 21 des ersten Wärmeübertragers 6 kann mittels eines ersten Mischventils 32 Fluid vom Fluidausgang 22 des zweiten Wärmeübertragers 7 zugemischt werden.

Der Fluidausgang 22 des Frischwasserwärmeübertragers 9 und der Rücklauf der Gebäudeheizung 10 sind mit dem Niedrigtemperaturzugang 25 und mit dem Fluideingang 21 des zweiten Wärmeübertragers 7 verbunden.

Mittels einer ersten Pumpe 30 und einer zweiten Pumpe 31 wird das Fluid im Fluidkreislauf 16 bewegt.

Ein zweites Mischventil 33 dient zum Beimischen des Rücklaufs der Gebäudeheizung 10 in den Vorlauf der Gebäudeheizung 10.

Fig. 2 zeigt ein Detail der Anordnung 1 mit einer Kaskadenregelung. Dementsprechend umfasst die Anordnung 1 eine erste Vorrichtung 34 zum Messen einer ersten Temperatur im Zulauf 18, eine zweite Vorrichtung 35 zum Messen einer zweiten Temperatur zwischen dem Expansionsventil 12 und dem Kältemitteleingang 19 des Verdampfers 4 und eine dritte Vorrichtung 36 zum Messen einer dritten Temperatur zwischen dem Verdichter 13 und dem Kältemitteleingang 19 am ersten Wärmeübertrager 6.

Mittels eines Hilfsreglers 37 ist der Kältemittelvolumenstrom im Expansionsventil 12 einstellbar. Des Weiteren ermittelt der Hilfsregler 37 eine Differenz der ersten und zweiten Temperatur. Das Expansionsventil 12 wird so angesteuert oder geregelt, dass diese Differenz einem Hüfs-Sollwert entspricht.

Der Hilfs-Sollwert wird in regelmäßigen Abständen durch den Hauptregler 38 korrigiert. Der Hauptregier 38 verändert den Hilfs-Sollwert in Abhängigkeit der dritten Temperatur.

Im Kältemittelkreislauf 15 der Wärmepumpe befinden sich vier Wärmeübertrager, ausgebildet als Verdampfer 4, interner Wärmeübertragers 5, erster Wärmeübertrager 6 und zweiter Wärmeübertrager 7. Der erste Wärmeübertrager 6, direkt nach dem Verdichter 13, dient zur Heißgasauskopplung und ermöglicht somit eine Wärmeauskopplung auf hohem Temperaturniveau, bevorzugt für die Frischwassererwärmung. Die zweite Pumpe 31 fördert das Fluid nach dem ersten Wärmeübertrager 6 über den Hochtemperaturzugang 23, vorzugsweise ausgebildet als Schichtladeeinrichtung, in den Hochtemperaturbereich 27 des Pufferspeichers 8. Dieser Hochtemperaturbereich 27 wird auch als "Bereitschaftsvolumen" bezeichnet. Durch das erste Mischventil 32 kann die Austrittstemperatur am Fluidausgang 22 des ersten Wärmeübertragers 6 konstant auf ca. 60°C gehalten werden.

Am zweiten Wärmeübertrager 7 erfolgt ein Verflüssigen des Kältemittels und somit ein Auskoppeln der Niedertemperaturwärme. Die erste Pumpe 30 fördert das Fluid zur Gebäudeheizung 10 und/oder in den unteren Teil des Pufferspeichers. Dieser Niedertemperaturbereich 29 des Pufferspeichers wird auch als "Taktvolumen" bezeichnet. Der hohe Volumenstrom von beispielsweise 1900 Liter/Stunde beim Eintritt in den Pufferspeicher 8 erfordert eine turbulenzarme Einbringung, vorzugsweise mit einer Schichtladeeinrichtung. Eine hohe Durchmischung im Pufferspeicher 8 würde zu einer deutlich geringeren Effizienz der Anordnung 1 führen.

Die Anordnung 1 ermöglicht im Heizbetrieb auch eine kontinuierliche Beladung des Hochtemperaturbereiches 27 des Pufferspeichers 8. Dieses Bereitschaftsvolumen mit hoher Temperatur kann mittels dem Frischwasserwärmeübertrager 9 für die Trink- oder Gebrauchswassererwärmung genutzt werden. Die Wärmeauskopplung bei hohen Temperaturen beträgt in dem in Fig. 1 dargestellten Betriebszustand 2,2 kW (28%) und bei niedrigen Temperaturen 5,6 kW (72%). An einem durchschnittlichen Wintertag kann die Wärmepumpe so kontinuierlich mit niedrigen Kondensationstemperaturen betrieben werden. Die Frischwassererwärmung kann somit ohne Anhebung der Kondensationstemperatur erfolgen. Die Wärmepumpe kann im Winter in Verbindung mit der Gebäudeheizung 10, insbesondere einer Flächenheizung, mit kontinuierlich hoher Leistungsziffer betrieben werden.

Die Frischwassererwärmung im Sommerbetrieb ist mit der Anordnung 1 auch mit hoher Effizienz möglich. Die Wärmepumpe wird im Sommer eingeschalten, wenn die Temperatur im Bereitschaftsvolumen (Hochtemperaturbereich 27) einen bestimmten Sollwert unterschreitet. Die Wärmeauskopplung am zweiten Wärmeübertrager 7 (ca. 1900 Liter/Stunde) ermöglicht ein stufenweises Anheben der Temperatur im unteren Teil (Niedrigtemperaturbereich 29 mit vorzugsweise 200 Litern) des Pufferspeichers 8. Die Temperatur im Niedrigtemperaturbereich 29 steigt nach jedem Durchlauf (ca. 6 bis 7 Minuten) um 3 Kelvin an. Gleichzeitig wird das Bereitschaftsvolumen (Hochtemperaturbereich 27) mittels der Heißgasauskopplung am ersten Wärmeübertrager 6 mit einer Temperatur von ca. 60°C beladen. Der Aufheizvorgang im Sommerbetrieb dauert etwa 50 Minuten, um den durchschnittlichen Warmwasser-Tagesbedarf eines Einfamilienhauses zu decken. Über die Zeitdauer von 50 Minuten werden dem Bereitschaftsvolumen ca. 210 Liter Heizungswasser mit 60°C zugeführt, Gleichzeitig wird das Taktvolumen im Niedrigtemperaturbereich 29 in acht Durchläufen mit je 3 Kelvin Temperaturanstieg von 20°C auf 44°C angehoben. Die Kondensationstemperaturen sind damit auch im Sommerbetrieb relativ niedrig und ermöglichen somit einen hoch effizienten Betrieb der Anordnung 1.

Die Regelung der Wärmepumpe erfolgt grundsätzlich über das Expansionsventil 12, das den Kältemittelmassenstrom so weit reduziert, dass eine konstante Überhitzung des Sauggases gegeben ist. Die Überhitzung wird aus der Differenz zwischen Sauggastemperatur und Verdampfungstemperatur bestimmt. Die Verdampfungstemperatur wird für das entsprechende Kältemittel aus dem Verdampfungsdruck ermittelt.

Zum Schutz des Verdichters 13 vor Flüssigkeitsschlägen ist eine Sauggasüberhitzung erforderlich. Wird die Sauggasüberhitzung vom Verdampfer 4 in den internen Wärmeübertrager 5 verlagert, kann bei gleicher Wärmequellentemperatur der Kreisprozess bei einer höheren Verdampfungstemperatur betrieben werden. Der geringere Temperaturhub führt dementsprechend zu höheren Leistungszahlen.

Die erfindungsgemäße Kaskadenregelung ermöglicht auch bei Verwendung des internen Wärmeübertragers 5 eine stabile Überhitzung. Des Weiteren wird effektiv vermieden, dass bei hohen Kondensationstemperaturen und einer hohen Überhitzung des Sauggases eine Überschreitung der zulässigen Heißgastemperatur erfolgt. Dadurch wird vermieden, dass die Ölschmierung im Verdichter 13 sich verschlechtert und somit ein Abschalten der Wärmepumpe durch den Druckgasüberhitzungsschutz erfolgt. Dies wird im Rahmen der Erfindung dadurch erreicht, dass der Hauptregler 38 den Hilfs-Sollwert für den Hilfsregler 37 vorgibt.

Die erfindungsgemäße Kaskadenregelung regelt die Heißgastemperatur (dritte Temperatur) entsprechend einem konstanten Sollwert, vorzugsweise 90 bis 120°C. Insbesondere bei höheren Kondensationstemperaturen kann dieser Sollwert entsprechend dem verwendeten Kältemaschinenöl gleitend auf bis zu 120°C angehoben werden. Der Hilfsreglers 27 bestimmt die Differenz zwischen der Soleeintrittstemperatur (erste Temperatur) und der Verdampfungstemperatur (zweite Temperatur) und verändert entsprechend der Abweichung zum Hilfs-Sollwert den Kältemittelmassenstrorn über einen Stellmotor am elektronischen Expansionsventil 12.

In definierten Zeitschritten überprüft der Hauptregler 38 die Abweichung der Heißgastemperatur (dritte Temperatur) vom Sollwert und korrigiert den Hilfs-Sollwert des Hilfsreglers 37. Die Regelstrecke des Hilfsreglers 37 ist im Vergleich zu einer Überhitzungsregelung einfacher, da die Soleeintrittstemperatur (erste Temperatur) genau erfasst werden kann und keine schnellen Temperaturänderungen auftreten. Die Verdampfungstemperatur (zweite Temperatur) wird aus dem Verdampfungsdruck bestimmt und kann mit sehr geringer Trägheit erfasst werden. Die Heißgastemperatur (dritte Temperatur) wird dagegen mit großer Trägheit erfasst und wird über den Hauptregler 38 als korrigierter Hilfs-Sollwert an den Hilfsregler 37 ausgegeben.

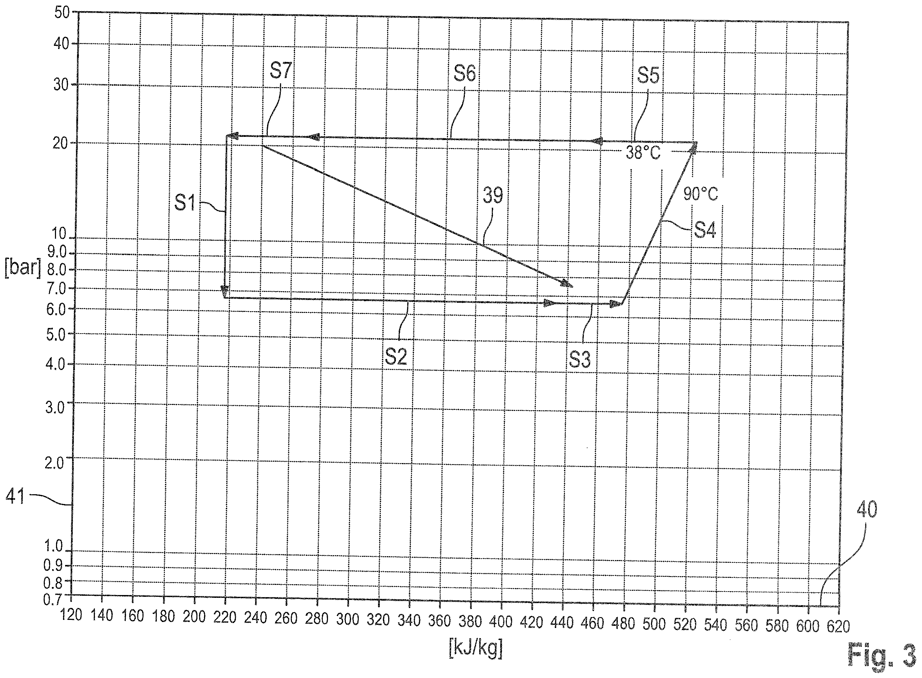

Fig. 3 zeigt den Ablauf des erfindungsgemäßen Verfahrens zur Anordnung 1 in einem Diagramm. Die x-Achse 40 zeigt die Einheit kJ/kg. Die y-Achse 41 zeigt den Druck in bar. Im Schritt S1 erfolgt zunächst ein Expandieren des Kältemittels. Daraufhin wird das Kältemittel im Schritt S2 verdampft. Im Schritt S3 erfolgt ein Überhitzen des Kältemittels sowie eine Restverdampfung. Insbesondere wird im Schritt S2 das Kältemittel zu 90% verdampft. Im Schritt S3 erfolgt mit der Überhitzung auf 25°C gleichzeitig eine Restverdampfung von 10%.

Im Schritt S4 wird das Kältemittel verdichtet und somit auf eine Temperatur von ca. 90°C angehoben. Daraufhin erfolgt eine Heißgasauskopplung im Schritt S5 auf 38°C und eine Verflüssigung des Kältemittel im Schritt S6. In den Schritten S5 und S6 wird die Wärme des Kältemittels an den Fluidkreislauf 16 übergeben. Im Schritt S7 erfolgt eine Unterkühlung des Kältemittels auf 5°C. Die Unterkühlung des Kältemittels gemäß Schritt S7 und die Überhitzung gemäß Schritt S3 werden gemeinsam in dem internen Wärmeübertrager 5 durchgeführt, sodass die interne Wärmeübertragung 39 erfolgt.

Die wesentliche Effizienzsteigerung bei der Frischwassererwärmung mit der erfindungsgemäßen Anordnung 1 lässt sich durch diese zweistufige Wärmeauskopplung erreichen. Im Schritt S5 wird das Kältemittel, beispielsweise R410A, von 90°C auf 38°C abgekühit und kann somit den Teilstrom des Fluidkreislaufes 16 auf ca. 60° erwärmen. Wird dieser Teilstrom im Pufferspeicher 8 mit sehr guter Temperaturschichtung im oberen Bereich eingelagert, so kann die Frischwassererwärmung aus diesem Bereich versorgt werden. Während der Heizperiode können so auch sehr gute COP-Werte der Wärmepumpe bei der Frischwassererwärmung realisiert werden.

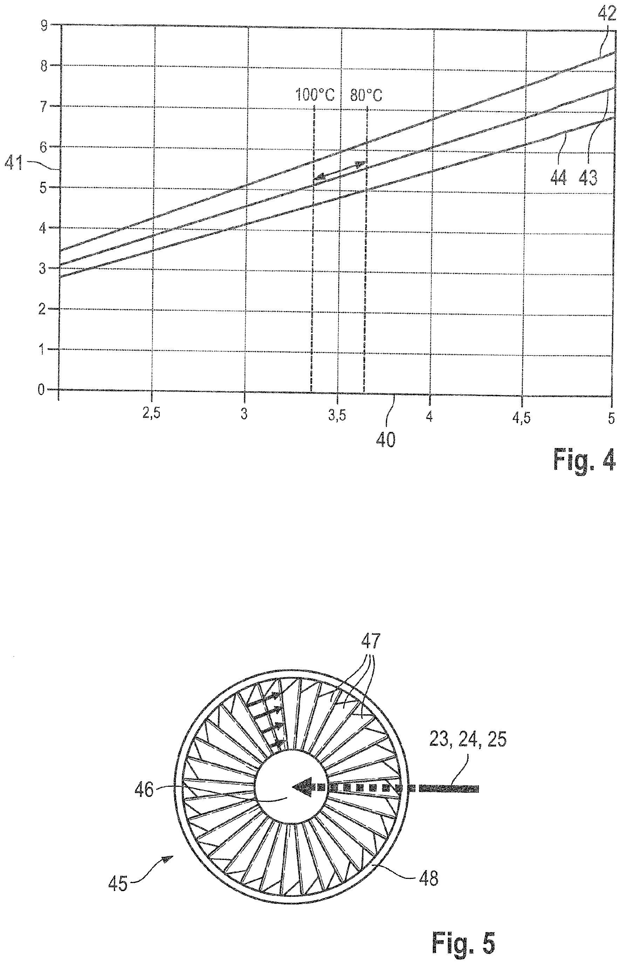

Fig. 4 zeigt in einem Diagramm die Wärmeleistung des Verdampfers 4 in Abhängigkeit von der Differenz zwischen der Soleeintrittstemperatur (erste Temperatur) und der Verdampfungstemperatur (zweite Temperatur). Die x-Achse 40 zeigt diese Differenz zwischen der ersten Temperatur und der zweiten Temperatur. Die y-Achse 41 zeigt die Wärmeleistung des Verdampfers in kW. Aufgetragen sind eine dimensionslose Übertragungsfähigkeit 42 von 1,5, eine dimensionslose Übertragungsfähigkeit 43 von 1,2 und eine dimensionslose Übertragungsfähigkeit 44 von 1.

Fig. 4 zeigt somit die übertragbare Wärmeleistung am Verdampfer 4 in Abhängigkeit der Hilfsregelgröße des Hilfsreglers 37 für verschiedene Auslegungen des Verdampfers. Die dimensionslose Übertragungsfähigkeit 42-44 entspricht der allgemein verwendeten Kennzahl NTU (number of transfer units) für Verdampfer bzw. im Allgemeinen für Wärmeübertrager. Steigt die Hilfsregelgröße, also die Differenz zwischen der ersten und zweiten Temperatur, an, so erhöht sich die Wärmeleistung am Verdampfer 4, der Kältemittelmassenstrom nimmt zu und die Heißgastemperatur (dritte Temperatur) sinkt mit gewisser Zeitverzögerung. Wird die Kennlinie der Regelstrecke linearisiert betrachtet, so kann der Proportionalbeiwert für den Hauptregler im dargestellten Arbeitspunkt angegeben werden:

$$K_p = \frac{\Delta x_{Ausgang}}{\Delta x_{Eingang}} = \frac{\Delta \delta_{WT}}{\Delta \delta_{Heißgas}} = \frac{0,28\,K}{-20\,K} = -0,014$$

Die erfindungsgemäß verwendete Kaskadenregelung hat folgende wesentliche Vorteile: Bei konstanter Heißgastemperatur (dritter Temperatur) ist eine kontinuierlich hohe Wärmeauskopplung von beispielsweise 25 bis 30%, auf hohem Temperaturniveau möglich. Eine hohe Heißgastemperatur garantiert in Verbindung mit dem internen Wärmeübertrager 5 in einem bestimmten Betriebsbereich eine hohe Sauggasüberhitzung und damit einen zuverlässigen Schutz des Verdichters 13 vor Flüssigkeitsschlägen. Die konstante Heißgastemperatur gewährleistet des Weiteren eine gleichbleibend gute Schmierung des Verdichters 13. Insbesondere bei Verwendung des internen Wärmeübertragers 5 ist die erfindungsgemäße Kaskadenregelung wesentlich stabiler als konventionelle Regelungen der Sauggasüberhitzung.

Fig. 5 zeigt ein Schichtladeelement 45, wie es vorzugsweise in den Pufferspeicher 8 eingesetzt ist. Das Schichtladeelement 45 dient zum turbulenzarmen Beladen und/oder Entladen des Pufferspeichers 8 über den Hochtemperaturzugang 23, den Mitteltemperaturzugang 24 und/oder den Niedrigtemperaturzugang 25.

Wie Fig. 5 zeigt, umfasst das Schichtladeelement 45 eine Nabe 46. Radial um diese Nabe 46 sind mehrere Leitbleche 47 angeordnet. Am äußeren Umfang des Schichtladeelementes 45 befindet sich ein Ring 48 zum Stützen der äußeren Enden der Leitbleche 47. Die Leitbleche 47 erstrecken sich in radialer Richtung des Pufferspeichers 8. Mittig, insbesondere über die Nabe 46, wird das Fluid eingeleitet. Dadurch fließt das Fluid über die Leitbleche 47 in den Pufferspeicher 8 und es kommt beim Einleiten zu einer möglichst geringen bzw. turbulenzarmen Vermischung des eingeleiteten Fluides mit dem im Pufferspeicher 8 bereits befindlichen Fluid. Auf diese Weise kann insbesondere während bzw. unmittelbar nach dem Einleiten des Fluides in den Pufferspeicher 8 eine innerhalb des Pufferspeichers 8 vorherrschende, temperaturabhängige Schichtung des im Pufferspeicher 8 gespeicherten Fluides im Wesentlichen aufrechterhalten werden.

Vorzugsweise ist das Schichtladeelement 45 derart ausgebildet, dass dessen (Außen-) Durchmesser im Wesentlichen dem Durchmesser des Pufferspeichers 8 entspricht.

Das Schichtladeelement 45 kann auch als "Dralldiffusor" bezeichnet werden. Das Schichtladeelement 45 ermöglicht eine im Wesentlichen horizontale Einbringung des Fluides vorzugsweise über den gesamten Querschnitt des Pufferspeichers 8, wobei die Durchmischung mit dem im Pufferspeicher 8 befindlichen Fluid sehr gering ist. Besonders bevorzugt ist vorgesehen, dass mehrere der Schichtladeelemente 45 direkt übereinander gestapelt werden, so dass das einfließende Fluid in mehreren Schichten über Leitbleche 47 geleitet wird.

**Bezugszeichenliste**

| | |
|---|---|
| 1 | Anordnung |
| 2 | Niederdruckbereich |
| 3 | Hochdruckbereich |
| 4 | Verdampfer |
| 5 | Interner Wärmeübertrager |
| 6 | Erster Wärmeübertrager, |
| 7 | Zweiter Wärmeübertrager |
| 8 | Pufferspeicher |
| 9 | Frischwasserwärmeübertrager |
| 10 | Gebäudeheizung |
| 11 | Ausdehnungsgefäß |
| 12 | Expansionsventil |
| 13 | Verdichter |
| 14 | Wärmequellenfluidkreislauf |
| 15 | Kältemittelkreislauf |
| 16 | Fluidkreislauf |
| 17 | Frischwasseranschlüsse |
| 18 | Zulauf |
| 19 | Kältemitteleingänge |
| 20 | Kältemittelausgänge |
| 21 | Fluideingänge |
| 22 | Fluidausgänge |
| 23 | Hochtemperaturzugang |
| 24 | Mittelfemperaturzugang |
| 25 | Niedrigtemperaturzugang |
| 26 | Zwischenanschluss |
| 27 | Hochtemperaturbereich |

28    Mitteltemperaturbereich
29    Niedrigtemperaturbereich
30    Erste Pumpe
31    Zweite Pumpe
32    Erstes Mischventil
33    Zweites Mischventil
34    Erste Vorrichtung
35    Zweite Vorrichtung
36    Dritte Vorrichtung
37    Hilfsregler
38    Hauptregler
S1    Expandieren
S2    Verdampfen
S3    Überhitzen
S4    Verdichten
S5    Heißgasauskopplung
S6    Verflüssigen
S7    Unterkühlen
39    Interne Wärmeübertragung
40    x-Achse
41    y-Achse
42-44  Übertragungsfähigkeit
45    Schichtladeelement
46    Nabe
47    Leitbleche
48    Ring

**Patentansprüche**

1.  Anordnung (1) zur Wärmeversorgung eines Gebäudes, umfassend

   - ein Expansionsventil (12) zum Expandieren eines Kältemittels,
   - einen Verdampfer (4) zum Verdampfen des expandierten Kältemittels,
   - einen internen Wärmeübertrager (5) zum Überhitzen des verdampften Kältemittels,
   - einen Verdichter (13) zum Verdichten des überhitzten Kältemittels,
   - einen ersten Wärmeübertrager (6) zum Übertragen der Wärme des verdichteten Kältemittels an einen Fluidkreislauf (16),
   - einen in den Verdampfer (4) mündenden Zulauf (18) für ein Wärmequellenfluid, vorzugsweise eine Sole,
   - eine erste Vorrichtung (34) zum Bestimmen einer ersten Temperatur,
   - eine zweite Vorrichtung (35) zum Bestimmen einer zweiten Temperatur,
   - eine dritte Vorrichtung (36) zum Bestimmen einer dritten Temperatur, und
   - wobei die dritte Temperatur eine Temperatur des Kältemittels zwischen dem internen Wärmeübertrager (5) und einem Kältemitteleingang (19) des ersten Wärmeübertragers (6), vorzugsweise zwischen dem Verdichter (13) und dem Kältemitteleingang (19) des ersten Wärmeübertragers (6), ist,

   **gekennzeichnet durch**

   - einen Hilfsregler (37) zum Regeln des Expansionsventils (12), so dass eine Differenz aus der ersten Temperatur und der zweiten Temperatur einem Hilfs-Sollwert entspricht,
   - einen Hauptregler (38), der in Abhängigkeit der dritten Temperatur den Hilfs-Sollwert korrigiert, und
   - einen zum ersten Wärmeübertrager (6) in Reihe geschalteten zweiten Wärmeübertrager (7) zum Übertragen der Wärme des Kältemittels an den Fluidkreislauf nach dem ersten Wärmeübertrager (6),
   - wobei das Kältemittel nach dem zweiten Wärmeübertrager (7) und vor dem Expansionsventil (12) zum Überhitzen des verdampften Kältemittels im internen Wärmeübertrager (5) nutzbar ist,
   - wobei die erste Temperatur eine Temperatur des Wärmequellenfluides im Zulauf (18) ist, und
   - wobei die zweite Temperatur eine Temperatur des Kältemittels zwischen dem Expansionsventil (12) und dem Verdampfer (4) ist.

2. Verfahren zur Wärmeversorgung eines Gebäudes, umfassend die folgenden Schritte:

- Expandieren eines Kältemittels,
- Verdampfen des expandierten Kältemittels,
- Überhitzen des verdampften Kältemittels,
- Verdichten des überhitzten Kältemittels,
- Heißgasauskoppeln durch Übertragen der Wärme des verdichteten Kältemittels an einen Fluidkreislauf (16), und
- Verflüssigen des Kältemittels durch Übertragen der Wärme des Kältemittels an den Fluidkreislauf (16) im Anschluss an die Heißgasauskopplung,
- Bestimmen einer ersten Temperatur,
- Bestimmen einer zweiten Temperatur,
- Bestimmen einer dritten Temperatur,
- wobei die dritte Temperatur eine Temperatur des Kältemittels nach dem Überhitzen und vor der Heißgasauskopplung, vorzugsweise nach dem Verdichten und vor der Heißgasauskopplung ist, und
- wobei das Kältemittel nach dem Verflüssigen und vor dem Expandieren zum Überhitzen des verdampften Kältemittels genutzt wird,

**gekennzeichnet durch** die Schritte

- Regeln der Expansion des Kältemittels, so dass eine Differenz aus der ersten Temperatur und der zweiten Temperatur einem Hilfs-Sollwert entspricht, und
- Korrigieren des Hilfs-Sollwertes in Abhängigkeit der dritten Temperatur,
- wobei die erste Temperatur eine Temperatur eines Zulaufs (18) eines Wärmequellenfluides ist, welches als Energiequelle zum Verdampfen des Kältemittels genutzt wird, und
- wobei die zweite Temperatur eine Temperatur des Kältemittels nach dem Expandieren und vor dem Verdampfen ist.

3. Verfahren nach Anspruch 2, **dadurch gekennzeichnet, dass** der Hilfs-Sollwert lediglich in definierten Zeitschritten, vorzugsweise von mindestens 1 Sekunde, korrigiert wird.

**Claims**

1. Arrangement (1) for the heat supply of a building comprising

- an expansion valve (12) for expanding a refrigerant,
- an evaporator (4) for evaporating the expanded refrigerant,
- an internal heat exchanger (5) for superheating the evaporated refrigerant,
- a compressor (13) for compressing the superheated refrigerant,
- a first heat exchanger (6) for transferring the heat of the compressed refrigerant to a fluid circuit (16),
- an inlet (18) leading into the evaporator (4) for a heat source fluid, preferably brine,
- a first device (34) for determining a first temperature,
- a second device (35) for determining a second temperature,
- a third device (36) for determining a third temperature, and
- wherein the third temperature is a temperature of the refrigerant between the internal heat exchanger (5) and a refrigerant inlet (19) of the first heat exchanger (6), preferably between the compressor (13) and the refrigerant inlet (19) of the first heat exchanger (6),

**characterised by**

- an auxiliary controller (37) for controlling the expansion valve (12) so that a difference between the first temperature and the second temperature corresponds to an auxiliary setpoint,
- a main controller (38) which adjusts the auxiliary setpoint based on the third temperature, and
- a second heat exchanger (7) connected in series to the first heat exchanger (6) for transferring the heat of the refrigerant to the fluid circuit downstream of the first heat exchanger (6),
- wherein the refrigerant downstream of the second heat exchanger (7) and upstream of the expansion valve (12) is useful for superheating the evaporated refrigerant in the internal heat exchanger (5),

- wherein the first temperature is a temperature of the heat source fluid in the inlet (18), and
- wherein the second temperature is a temperature of the refrigerant between the expansion valve (12) and the evaporator (4).

2.  Method for supplying heat to a building, comprising the following steps:

    - expanding a refrigerant,
    - evaporating the expanded refrigerant,
    - superheating the evaporated refrigerant,
    - compacting the superheated refrigerant,
    - hot gas extraction by transferring the heat of the compressed refrigerant to a fluid circuit (16), and
    - liquefying the refrigerant by transferring the heat of the refrigerant to the fluid circuit (16) following the hot gas extraction,
    - determining a first temperature,
    - determining a second temperature,
    - determining a third temperature,
    - wherein the third temperature is a temperature of the refrigerant after superheating and before the hot gas extraction, preferably after compression and before the hot gas extraction, and
    - wherein the refrigerant is used to superheat the evaporated refrigerant after liquefaction and before expansion,

    characterised by the steps

    - controlling the expansion valve so that a difference between the first temperature and the second temperature corresponds to an auxiliary setpoint, and
    - correcting the auxiliary setpoint based on the third temperature,
    - wherein the first temperature is a temperature of an inlet (18) of a heat source fluid which is used as an energy source for evaporating the refrigerant, and
    - wherein the second temperature is a temperature of the refrigerant after expansion and before evaporation.

3.  A method according to Claim 2, characterised in that the auxiliary setpoint is corrected only in defined time steps, preferably of at least 1 second.

**Revendications**

1.  Ensemble (1) servant à l'alimentation en chaleur d'un bâtiment, comprenant

    - une valve d'expansion (12) servant à expanser un réfrigérant,
    - un évaporateur (4) servant à évaporer le réfrigérant expansé,
    - un échangeur de chaleur (5) interne servant à surchauffer le réfrigérant évaporé,
    - un compresseur (13) servant à compresser le réfrigérant surchauffé,
    - un premier échangeur de chaleur (6) servant à transférer la chaleur du réfrigérant compressé à un circuit de fluide (16),
    - une arrivée (18) débouchant dans l'évaporateur (4) pour un fluide de source de chaleur, de préférence une saumure,
    - un premier dispositif (34) servant à déterminer une première température,
    - un deuxième dispositif (35) servant à déterminer une deuxième température,
    - un troisième dispositif (36) servant à déterminer une troisième température, et
    - dans lequel la troisième température est une température du réfrigérant entre l'échangeur de chaleur (5) interne et une entrée de réfrigérant (19) du premier échangeur de chaleur (6), de préférence entre le compresseur (13) et l'entrée de réfrigérant (19) du premier échangeur de chaleur (6),

    **caractérisé par**

    - un régulateur auxiliaire (37) servant à réguler la valve d'expansion (12) de sorte qu'une différence entre la première température et la deuxième température corresponde à une valeur de consigne auxiliaire,
    - un régulateur principal (38), qui corrige la valeur de consigne auxiliaire en fonction de la troisième température, et
    - un deuxième échangeur de chaleur (7) monté en série par rapport au premier échangeur de chaleur (6),

servant à transférer la chaleur du réfrigérant au circuit de fluide après le premier échangeur de chaleur (6),
- dans lequel le réfrigérant après le deuxième échangeur de chaleur (7) et avant la valve d'expansion (12) peut être utilisé afin de surchauffer le réfrigérant évaporé dans l'échangeur de chaleur (5) interne,
- dans lequel la première température est une température du fluide de source de chaleur dans l'arrivée (18), et
- dans lequel la deuxième température est une température du réfrigérant entre la valve d'expansion (12) et l'évaporateur (4).

2.  Procédé servant à l'alimentation en chaleur d'un bâtiment, comprenant les étapes qui suivent consistant à :

- expanser un réfrigérant,
- évaporer le réfrigérant expansé,
- surchauffer le réfrigérant évaporé,
- compresser le réfrigérant surchauffé,
- découpler du gaz chaud par le transfert de la chaleur du réfrigérant compressé au circuit de fluide (16), et
- liquéfier le réfrigérant par le transfert de la chaleur du réfrigérant au circuit de fluide (16) immédiatement après le découplage de gaz chaud,
- déterminer une première température,
- déterminer une deuxième température,
- déterminer une troisième température,
- dans lequel la troisième température est une température du réfrigérant après le surchauffage et avant le découplage de gaz chaud, de préférence après la compression et avant le découplage de gaz chaud, et
- dans lequel le réfrigérant est utilisé après la liquéfaction et avant l'expansion afin de surchauffer le réfrigérant évaporé,

**caractérisé par** les étapes consistant à

- réguler l'expansion du réfrigérant de sorte qu'une différence entre la première température et la deuxième température corresponde à une valeur de consigne auxiliaire, et
- corriger la valeur de consigne auxiliaire en fonction de la troisième température,
- dans lequel la première température est une température d'une arrivée (18) d'un fluide de source de chaleur, qui est utilisé en tant que source d'énergie servant à évaporer le réfrigérant, et
- dans lequel la deuxième température est une température du réfrigérant selon l'expansion et avant l'évaporation.

3.  Procédé selon la revendication 2, **caractérisé en ce que** la valeur de consigne auxiliaire est corrigée seulement lors de phases temporelles définies, de préférence d'au moins 1 seconde.

Fig. 1

EP 2 759 773 B1

Fig. 2

Fig. 3

Fig. 4

Fig. 5

**EP 2 759 773 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 03106900 A1
- DE 102005040456 A1